# EUROPÄISCHE PATENTSCHRIFT

(11) **EP 0 776 717 B1**
(45) Veröffentlichungstag und Bekanntmachung des Hinweises auf die Patenterteilung: **20.10.1999**
(21) Anmeldenummer: 96117998.3
(22) Anmeldetag: 09.11.1996
(51) Int. Cl.: B22F 9/30

(54) **Verfahren zur Herstellung von Edelmetallpulvern**
Process for preparing noble metal powders
Procédé de préparation de poudre métallique noble

(30) Priorität: 06.12.1995 DE 19545455
(43) Veröffentlichungstag der Anmeldung: 04.06.1997
(73) Patentinhaber: Degussa-Hüls Aktiengesellschaft, 60287 Frankfurt am Main (DE)
(72) Erfinder: Jacobsen, Hauke, Dr., 63486 Bruchköbel (DE); Hartmann, Werner, Dr., 64832 Babenhausen (DE); Katusic, Stipan, 65779 Kelkheim (DE); Starz, Karl-Anton, Dr., 63517 Rodenbach (DE)

(56) Entgegenhaltungen:
- EP-A- 0 591 881
- FR-A- 1 444 997
- MATERIALS RESEARCH BULLETIN, Bd. 28, Nr. 4, 1.April 1993, Seiten 369-376, XP000364904 PLUYM T C: "PALLADIUM METAL AND PALLADIUM OXIDE PARTICLE PRODUCTION BY SPRAY PYROLYSIS"

## Beschreibung

Die Erfindung betrifft ein Verfahren zur Herstellung von Edelmetallpulvern, insbesondere von Pulvern aus Palladium, Silber und Palladium-Silber-Legierungen, durch Überführung der in einem Lösungsmittel gelösten Edelmetallverbindungen in ein Aerosol, Einleiten des Aerosols in einen Flammenreaktor bei Temperaturen oberhalb der Zersetzungstemperatur der Edelmetallverbindungen oder -oxide und Abscheiden der entstandenen Edelmetallpulver.

Feinteilige Edelmetallpulver werden in der Elektronik für siebdruckfähige Pasten verwendet, beispielsweise zur Herstellung dünner Kontaktschichten. Besonders Keramikvielschichtwiderstände finden neben anderen Bausteinen wachsende Anwendungen auf diesem Gebiet. Zu ihrer Herstellung brennt man abwechselnd Schichten aus einem keramischen Dielektrikum und aus Edelmetallen bei Temperaturen um 1300° C an Luft zusammen. Als Edelmetall verwendet man meist Palladium, Silber oder Palladiumsilber-Legierungen in Pulverform. Da die Edelmetallschichten immer dünner werden sollen, müssen diese Pulver eine hohe Feinheit aufweisen, das heißt kleiner als 1 µm, damit siebdruckfähige Pasten hergestellt werden können. Feine Palladium-, Silber- oder Palladium-Silber-Pulver oxidieren aber beim Einbrennen der Pasten, und zwar umso stärker, je feinteiliger sie sind. Dadurch entstehen fehlerhafte Kontaktschichten mit feinen Rissen und Ablösungen. Man ist daher bestrebt, ein Pulver mit möglichst kleiner Oberfläche herzustellen, um die Oxidation beim Einbrennen möglichst gering zu halten. Außerdem sintern Edelmetallpulver mit einem hohen Feinanteil beim Einbrand sehr stark. Der dadurch bedingte Schrumpf führt zu Unterbrechungen in den Kontaktschichten.

Feinteilige Edelmetallpulver werden im großen Maßstab hergestellt, indem wäßrige Lösungen von Edelmetallsalzen mit einem Reduktionsmittel versetzt werden. Dieses Verfahren hat allerdings den Nachteil, daß das Edelmetall aus der wäßrigen Phase abgetrennt und getrocknet werden muß. Eine Verfahrensverbesserung besteht darin, die wäßrige Lösung des Edelmetallsalzes in kleinste Tröpfchen in einem Trägergas zu zerteilen, das heißt ein Aerosol zu formen und dieses Aerosol thermisch zu Zersetzen. Je nach Reaktionsbedingungen (Temperatur, Sauerstoffanteil) entsteht ein Metall oder auch Metalloxid. Die entstehende Fest-in-Gas Dispersion der Metall(oxid)teilchen kann leicht durch gängige Methoden, wie Filter, Zyklon o.ä. behandelt und so das Pulver trocken erhalten werden.

Die EP-0 591 881-A beschreibt ein Verfahren zur Herstellung von feinen Palladiumpulvern durch Erzeugung einer ungesättigten Lösung einer thermisch zersetzbaren Palladiumverbindung in einem flüchtigen Lösungsmittel, Überführung in ein Aerosol aus feinen Tröpfchen dieser Lösung in einem inerten Trägergas und Einleitung des Aerosolstroms in einen Ofen bei Temperaturen oberhalb des Zersetzungspunktes der Palladiumverbindung, aber unterhalb des Palladiumschmelzpunktes, wobei ein feines Palladiumpulver entsteht, das vom Trägergas und den Lösungsmitteldämpfen abgetrennt wird. Man erhält so ein Palladiumpulver mit BET-Oberflächen in der Größenordnung von über 2m²/g, da diese Pulver einen relativ großen Feinanteil von Teilchengrößen weit unterhalb 1 µm enthalten.

Das gleiche gilt für eine Palladiumpulver nach EP-0 593 167-A, das analog dem Verfahren gemäß EP-0 591 881-A hergestellt wird, mit dem Unterschied, daß das Aerosol bzw. die Palladiumverbindungen bei Temperaturen oberhalb des Palladiumschmelzpunkts zersetzt wird. Auch hier entsteht ein Pulver mit hohen Feinkornanteilen.

Außer in einem von außen beheizten Ofen kann das Aerosol auch in einem Flammenreaktor zersetzt werden, z.B. durch Einblasen in eine Gasflamme. Dieses Verfahren wird z.B. im 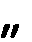 Journal Soc. Japan, 1987, 2293-2300", beschrieben. Dabei wird ein Aerosol aus Trägergas und der wässrigen Lösung des Edelmetallsalzes in eine Wasserstoff/Sauerstoffflamme geleitet. Aber auch hierbei erhält man ein Pulver mit einem hohen Feinkornanteil, was sich in einer hohen spezifischen BET-Oberfläche niederschlägt. Solche Pulver sind aber wegen ihrer leichten Oxidation während des Einbrennens der aus ihnen hergestellten Resinatpasten auf keramische Träger unerwünscht.

Es war daher Aufgabe der vorliegenden Erfindung, ein Verfahren zur Herstellung von Edelmetallpulvern zu entwickeln, insbesondere von Pulvern aus Palladium, Silber und Palladium-Silber-Legierungen, durch Überführung der in einem Lösungsmittel gelösten Edelmetallverbindungen, in ein Aerosol, Einleiten des Aerosols in einen Flammenreaktor bei Temperaturen oberhalb der Zersetzungstemperatur der Edelmetallverbindungen oder -oxide und Abscheiden der entstandenen Edelmetallpulver, wobei das Verfahren so geführt werden sollte, daß ein Pulver möglichst einheitlicher Korngröße ohne Feinkornanteil mit möglichst glatter Oberfläche entsteht.

Diese Aufgabe wird erfindungsgemäß dadurch gelöst, daß das Aerosol vor der Einleitung in den Flammenreaktor bei Temperaturen oberhalb des Siedepunkts des Lösungsmittels weitestgehend vom Lösungmittel befreit wird.

Vorzugsweise erfolgt die Temperaturbehandlung des Aerosols unmittelbar vor der Einleitung in den Flammenreaktor in einer Ofenstrecke bei Temperaturen von 10 bis 100° C oberhalb des Siedepunktes des Lösungmittels mit einer Verweilzeit von 2 bis 20 Sekunden.

Überraschenderweise erhält man mit diesem Verfahren ein kugelförmiges Edelmetallpulver einheitlicher Korngröße ohne wesentlichen Feinkornanteil. Diese Pulver besitzen daher eine charakteristische spezifische BET-Oberfläche von weniger als 2 m²/g und sind hervorragend geeignet für den Einsatz in Resinatpasten zur Herstellung dünner Edelmetallschichten in der Elektronik.

Zur Herstellung dieser Edelmetallpulver mit kleiner Oberfläche löst man zuerst eine Edelmetallverbindung in einem flüchtigen Lösungsmittel, insbesondere Wasser auf. Als Palladium- und Silberverbindungen kann man vorzugsweise die Nitrate, Carboxylate oder Alkoholate einsetzen, wobei als Lösungsmittel neben Wasser Alkohole, Azeton oder Äther dienen können. Die Lösung wird dann in ein Aerosol überführt, wobei als Trägergas meist Luft oder Stickstoff verwendet wird und die Aerosolbindung beispielsweise in einer Mehrstoffdüse, einem Ultraschallgenerator oder einer elektrostatischen Sprühvorrichtung vorgenommen wird. Dieses Aerosol wird dann in einem von außen beheizten Ofen weitestgehend vom Lösungsmittel befreit, bevor es in einen Flammenreaktor eingeleitet wird. Die Abscheidung des Edelmetallpulvers erfolgt dann mit einem Zyklon oder einem Filter.

Die Zusammensetzung und Menge des Wasserstoff/Sauerstoff- oder Wasserstoff/Luft-Brenngases wird so gewählt, daß die Temperatur im Reaktor genügend hoch ist, um ein Sintern der Edelmetallpartikel zu ermöglichen. Die Temperatur, die hierfür geeignet ist, liegt zwischen dem Schmelzpunkt des jeweiligen Metalls bzw. der Legierung und einer Temperatur, die ca. 500°C unterhalb des Schmelzpunktes liegt.

Durch die thermische Vorbehandlung des Aerosols vor dem Eintritt in den Flammenreaktor wird verhindert, daß Flüssigkeitströpfchen in den Flammenbereich eintreten. Diese scheinen für die Bildung uneinheitlicher Pulvergrößen mit großem Feinkornanteil und hoher spezifischer Oberfläche verantwortlich zu sein.

Die im Flammenpyrolyseverfahren hergestellten Edelmetallpulver wurden zu siebdruckfähigen Pasten verarbeitet und für ihre Eignung zur Herstellung von Keramikvielschichtkondensatoren (MLC's) untersucht. Es zeigte sich, daß die Pulver mit hoher Oberfläche, die ohne Vortrocknungsprozeß hergestellt wurden, zur Herstellung von Vielschichtkondensatoren nicht geeignet sind. Die nach den erfindungsgemäßen Verfahren erzeugten Edelmetallpulver ergeben dagegen Kondensatoren mit sehr guten elektrischen Werten und sehr dünnen Elektrodenschichten.

Folgende Beispiele sollen das erfindungsgemäße Verfahren näher erläutern:
1. Eine wäßrige Palladium-Nitrat/Lösung mit einem Gehalt von 10 % Pd wird mit einem Ultraschall-Aerosolgenerator zu einem feinen Aerosol zerstäubt. Das Aerosol wird mit Hilfe eines Trägergases (Stickstoff) in ein von außen beheiztes Duranglasrohr geführt, in dem es thermisch behandelt wird. Anschließend wird das Aerosol in das innere Rohr eines koaxialen Brenners geführt. In das äußere Rohr wird Wasserstoff eingespeist, der mit Umgebungsluft verbrennt. Die Flamme wird in ein Glasrohr geführt, das über einen Filter, an dem sich ein Gebläse befindet, an die Abluft angeschlossen ist. Am Filter scheidet sich das Produkt ab.
Das so erhaltene Palladium-Pulver wird mittels Röntgendiffraktometrie (XRD), Rasterelektronenmikroskopie (REM), Oberflächenmessung (spez. Oberfläche nach BET) und Korngrößenverteilung (Lasergranulometer CILAS) charakterisiert. Die Ergebnisse sind nachfolgend zusammengefasst.

| Verfahrensparameter | |
|---|---|
| Temperatur Vortrocknung: | 150°C |
| Brenngas: | Wasserstoff, 600 l/h |
| Abluftmenge: | 3000 l/h. |

| Pulverdaten | |
|---|---|
| Spezifische Oberfläche (BET): | 0,9 m²/g |
| Mittlere Korngröße (CILAS): | 1,2 µm |
| Kornform (REM): | kugelig |
| Kornverteilung: | kein Feinanteil. |

Das so hergestellte Palladium-Pulver wird in eine siebdruckfähige Paste mit einem Edelmetallgehalt von 40 Gew.% verarbeitet. Unter Verwendung der dielektrischen Keramik 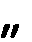 Degussa AD 402" werden damit Vielschichtkondensatoren mit zwei aktiven Lagen hergestellt und bei 1260 °C eingebrannt. Die elektrischen Werte der so hergestellten Kondensatoren sind wie folgt:

| | |
|---|---|
| Kapazität: | 58,6 nF |
| Dielektrische Verlustfaktor: | 2,5 %. |

2. Analog Beispiel 1 wird ein Palladiumpulver ohne Vortrocknung des Aerosols hergestellt. Das erhaltene Pd-Pulver wird mittels Röntgendiffratometrie (XRD), Rasterelektronenmikroskopie (REM), Messung der spez. Oberfläche (BET) sowie Korngrößenverteilung charakterisiert. Die Ergebnisse sind wie folgt:

| Verfahrensparameter | |
|---|---|
| Brenngas: | Wasserstoff, 1000 l/h |
| keine Vortrocknung Abluftmenge: | 4000 l/h. |

| Pulverdaten | |
|---|---|
| Spezifische Oberfläche (BET): | 11 m²/gr |
| Mittlere Korngröße (CILAS): | 0,3 µm |
| Kornform: | spratzig-unregelmäßig |
| Kornverteilung: | Feinanteil 20 % <0,1 µm. |

Das erhaltene Pulver wird wie in Beispiel 1 beschrieben in einer Paste verarbeitet und damit Vielschichtkondensatoren hergestellt. Die erzeugten Kondensatoren zeigten keine Kapazitätswerte.
3. Eine wäßrige Lösung von Silbernitrat (AgNO₃) und Palladiumnitrat mit einem Gehalt von 7 % Pd und 3 % Ag wird wie unter Beispiel 1 beschrieben in ein Silber-Palladium-Legierungspulver überführt. Die Herstellung und Charakterisierung des Pulvers erfolgt wie im Beispiel 1 beschrieben.

| Verfahrensparameter | |
|---|---|
| Temperatur Vortrockung: | 150 °C |
| Brenngas: | Wasserstoff, 600 l/h |
| Abluftmenge: | 2700 l/h |

| Pulverdaten | |
|---|---|
| Spezifische Oberfläche (BET): | 1,0 m²/gr |
| Mittlere Korngröße (CILAS): | 1,2 µm |
| Kornform (REM) | kugelig |
| Kornverteilung: | kein Feinanteil. |

Das Pulver wird in eine siebdruckfähige Paste mit einem Edelmetallgehalt von 40 Gew.% verarbeitet. Unter Verwendung der dielektrischen Keramik 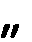 Degussa AD 402H" werden damit Vielschichtkondensatoren mit zwei aktiven Lagen hergestellt und bei 1240 °C gebrannt. Die elektrischen Werte der so hergestellten Kondensatoren sind wie folgt:

| | |
|---|---|
| Kapazität: | 56,2 nF |
| Dielektrischer Verlustfaktor: | 2,5 %. |

4. Analog Beispiel 3 wird ein Silber-Palladiumpulver hergestellt, jedoch wird auf eine Vortrocknung des Aerosols verzichtet. Die Charakterisierung des Pulvers erfolgt wie in Beispiel 3 angegeben.

| Verfahrensparameter | |
|---|---|
| Temperatur Vortrocknung: | keine Vortrocknung |
| Brenngas: | Wasserstoff, 600 l/h |
| Abluftmenge: | 2700 l/h |

| Pulverdaten | |
|---|---|
| Spezifische Oberfläche (BET): | 5,2 m²/gr |
| Mittlere Korngröße (CILAS): | 1,1 µm |
| Kornform: | spratzig-unregelmäßig |
| Kornverteilung: | Feinanteil 10 % <0,1 µm. |

Die mit diesem Pulver hergestellten Vielschichtkondensatoren zeigen keine Kapazitätswerte.
5. Eine wäßrige Lösung von Silbernitrat (AgNO₃) mit einem Gehalt von 10 % Ag wird mit einem Ultraschall-Aerosol-Generator zu einem feinen Aerosol zerstäubt. Das Aerosol wird in einem beheizten Rohr thermisch vorbehandelt. Die Herstellung und Charakterisierung des Pulvers erfolgt wie in Beispiel 1 beschrieben.

| Verfahrensparameter | |
|---|---|
| Temperatur Vortrocknung: | 150 °C |
| Brenngas: | Wasserstoff, 600 l/h |
| Abluftmenge: | 3000 l/h. |

| Pulverdaten | |
|---|---|
| Spezifische Oberfläche (BET): | 1,2 m²/g |
| Mittlere Korngröße (CILAS): | 1,5 µm |
| Kornform (REM): | kugelig |
| Kornverteilung: | kein Feinanteil. |

6. Eine wäßrige Lösung von Platinnitrat mit einem Gehalt von 10 % Pt wird mit einem Ultraschall-Aerosolgenerator zu einem feinen Aerosol zerstäubt. Das Aerosol wird in einem beheizten Rohr thermisch vorbehandelt. Die Herstellung und Charakterisierung des Pulvers erfolgt wie in Beispiel 1 beschrieben.

| Verfahrensparameter | |
|---|---|
| Temperatur Vortrocknung: | 150 °C |
| Brenngas: | Wasserstoff, 800 l/h |
| Abluftmenge: | 4000 l/h. |

| Pulverdaten | |
|---|---|
| Spezifische Oberfläche (BET): | 1,4 m²/g |
| Mittlere Korngröße (CILAS): | 1,6 µm |
| Kornform (REM): | kugelig |
| Kornverteilung: | kein Feinanteil. |

## Patentansprüche

1. Verfahren zur Herstellung von Edelmetallpulvern, insbesondere von Pulvern aus Palladium, Silber und Palladium-Silberlegierungen, durch Überführung der in einem Lösungsmittel gelösten Edelmetallverbindungen in ein Aerosol, Einleiten des Aerosols in einen Flammenreaktor bei Temperaturen oberhalb der Zersetzungstemperatur der Edelmetallverbindungen oder -oxide und Abscheiden der entstandenen Edelmetallpulver,
**dadurch gekennzeichnet,**
daß das Aerosol vor der Einleitung in den Flammenreaktor bei Temperaturen oberhalb des Siedepunktes des Lösungsmittels weitestgehend vom Lösungsmittel befreit wird.

2. Verfahren nach Anspruch 1,
**dadurch gekennzeichnet,**
daß die Temperaturbehandlung unmittelbar vor der Einleitung in den Flammenreaktor bei Temperaturen von 10 bis 100° C oberhalb des Siedepunktes des Lösungsmittels mit einer Verweilzeit von 2 bis 20 Sekunden stattfindet.

## Claims

1. Process for the production of noble metal powders, in particular of Powders composed of palladium, silver and palladium/silver alloys, by converting the noble metal compounds dissolved in a solvent into an aerosol, introducing the aerosol into a flame reactor at temperatures above the decomposition temperature of the noble metal compounds or oxides and separating the resultant noble metal powders,
characterised in that,
before introducing the aerosol into the flame reactor, the solvent is as far as possible removed from the aerosol at temperatures above the boiling point of the solvent.

2. Process according to claim 1,
characterised in that
the heat treatment proceeds immediately before introduction into the flame reactor at temperatures of 10 to 100°C above the boiling point of the solvent with a residence time of 2 to 20 seconds.

## Revendications

1. Procédé de production de poudres de métaux précieux, en particulier de poudre de palladium, d'argent et d'alliage palladium-argent, par transformation des composés de métaux précieux dissous dans un solvant en un aérosol, introduction de l'aérosol dans un réacteur à flamme à des températures supérieures à la température de décomposition des composés ou oxydes de métaux précieux et séparation des poudres de métaux précieux apparus,
caractérisé en ce qu'
on débarrasse le plus largement possible du solvant l'aérosol avant l'introduction dans le réacteur à flamme à des températures supérieures au point d'ébullition du solvant.

2. Procédé selon la revendication 1,
caractérisé en ce que
le traitement de température s'effectue immédiatement avant introduction dans le réacteur à flamme à des températures de 10 à 100°C au-dessus du point d'ébullition du solvant avec un temps de séjour de 2 à 20 secondes.
